# FASCICULE DE BREVET EUROPEEN

(11) **EP 3 223 032 B1**
(45) Date de publication et mention de la délivrance du brevet: **09.06.2021**
(21) Numéro de dépôt: 17162459.6
(22) Date de dépôt: 23.03.2017
(51) Int. Cl.: G01S 13/78, G01S 13/76, G01S 13/87

(54) **RADAR SECONDAIRE APTE A DETECTER DES CIBLES EN HAUTE ELEVATION**
SEKUNDÄRRADAR FÜR DIE ERFASSUNG VON ZIELEN IN GROSSER HÖHE
SECONDARY RADAR CAPABLE OF DETECTING HIGH-ALTITUDE TARGETS

(30) Priorité: 25.03.2016 FR 1600504
(43) Date de publication de la demande: 27.09.2017
(73) Titulaire: THALES, 92400 Courbevoie (FR)
(72) Inventeur: BILLAUD, Philippe, 91470 LIMOURS (FR)
(74) Mandataire: Marks & Clerk France

(56) Documents cités:
- EP-A1- 2 922 144
- EP-A1- 2 930 531
- US-A- 4 303 920

## Description

La présente invention concerne un radar secondaire apte à détecter des cibles en haute élévation.

Les radars de contrôle aérien ne couvrent généralement pas tous les angles en élévation compris entre la direction de l'horizon et le zénith. La zone non couverte au-dessus du centre de phase de l'antenne du radar forme un cône que l'on appelle cône de silence. Ce cône de silence peut affecter plusieurs fonctions radar de contrôle du trafic aérien.

Les radars « Enroute » sont caractérisés par une très grande portée dans la direction de leur rayonnement maximal. Leur installation sur des sites d'altitude élevée, en les dégageant d'obstacles du relief, leur garantit l'exploitation de cette capacité de portée à faible élévation. Pour ces radars, le cône de silence peut être jugé trop grand (par exemple, l'altitude de croisière des vols commerciaux (FL 330) correspond à un angle d'élévation de 25° à 25 km). Le cône de silence peut également poser des problèmes pour un radar d'aéroport. En effet, dans les deux cas le cône de silence induit des manques :
- de longue durée pour des vols en haute altitude (configuration Enroute) ;
- de moins longue durée mais pour des vols manœuvrant de moyenne altitude (configuration Aéroport).

Classiquement, par principe les antennes de radars de contrôle aérien, encore appelés radars ATC (Air Traffic Control), sont donc des antennes de type LVA (Large Vertical Aperture) ayant quatre objectifs :
- un fort gain maximal pour les utilisations « Enroute » (longue portée), typiquement 27 dB entre 5° et 10° d'élévation ;
- un faisceau principal fin en azimut (classiquement 2.5° correspondant à une largeur antenne de 8m) pour assurer une précision et limiter l'effet des pollutions.
- une forte chute au sol pour se protéger en configuration aéroport des réflexions des bâtiments proches, tels que des tours de quelques dizaines de mètres, avec par exemple une chute de gain de 2 dB par degré pour les élévations de 0° à -10° ;
- enfin un niveau transmis ou reçu avec les cibles quasi constant pour des vols longs courriers (stables en altitude) classiquement de 5° à 40° ;

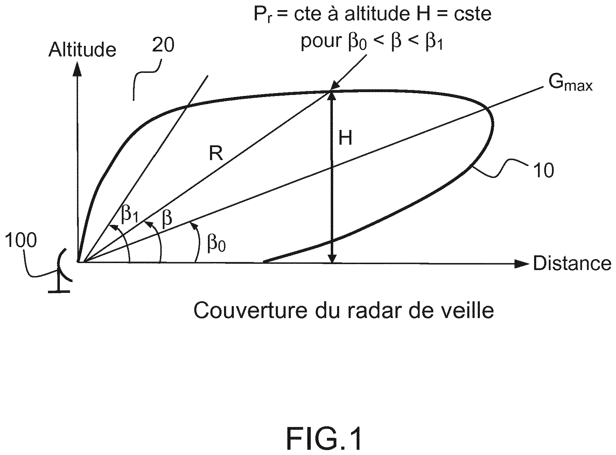

Les antennes du domaine du contrôle aérien civil (ATC) présentent un diagramme de rayonnement en cosécante carrée, du fait de leur adaptation à la surveillance aérienne : un tel diagramme permet de répartir dans le plan vertical l'énergie rayonnée en une seule exploration du quantum azimutal. Ce diagramme de rayonnement permet d'obtenir un signal reçu d'amplitude relativement constante pour une cible décrivant une trajectoire à altitude constante. La figure 1 illustre le gain typique d'une antenne d'un radar ATC utilisant ce type d'antenne. Plus particulièrement, elle illustre par une courbe 10 le gain d'antenne paramétré en angle d'élévation et projeté dans un diagramme distance-altitude.
Pour un tel diagramme en cosécante carrée et dans une zone parcourue selon une trajectoire à altitude constante, le gain d'antenne G varie sensiblement comme le carré de la cosécante de l'angle d'élévation *β*, soit G(*β*) ≈ cosec² *β*, c'est-à-dire que la variation de ce gain compense l'effet de rapprochement de telle sorte à conserver un niveau constant de signal reçu sur cette partie de la trajectoire. De plus, il n'est pas utile d'effectuer une surveillance de l'espace aérien à une altitude supérieure au plafond de vol des aéronefs

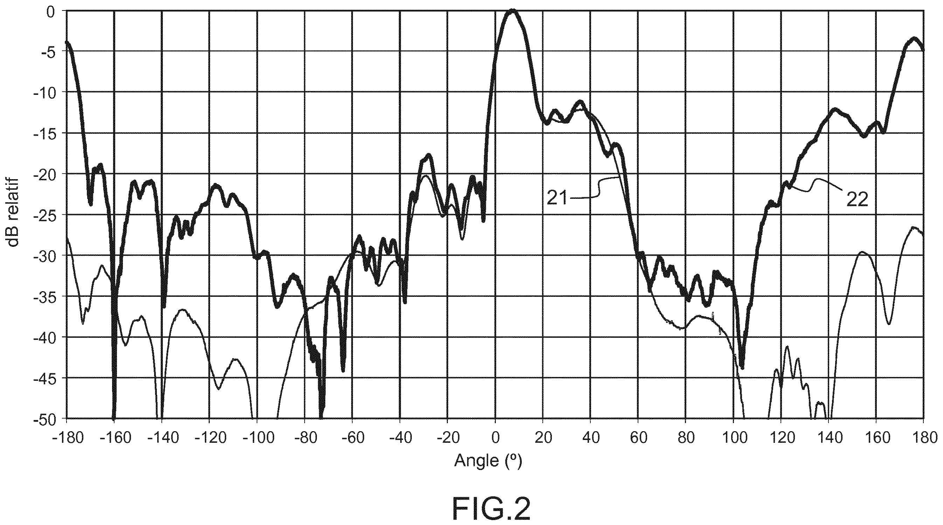

En pratique, le cône de silence 20 est plutôt envisagé comme un degré de liberté pour la conception de l'antenne. En particulier les exigences porteraient plutôt sur un affaiblissement garanti au-delà d'environ 50° d'élévation. La figure 2 présente le diagramme en élévation pour la voie somme 21 et la voie de contrôle 22 (en relatif chacun par rapport à leur maximum respectif) d'une antenne LVA classique. Cette figure montre que le gain d'antenne s'écroule à haute élévation (angles au-delà de 50°).
Les antennes actuelles utilisées dans le monde ATC ne sont donc clairement pas faites pour traiter des cibles dans le cône de silence.
En conséquence, la solution au niveau système pour palier cet état de fait, commun aux radars ATC, consiste à utiliser une double couverture radars.

Ces 2 radars étant assez proches permettent d'assurer chacun la détection dans le cone de silence de l'autre.

Un document EP 2 930 531A1 divulgue un radar secondaire de surveillance à grande cadence de rafraîchissement. Un document US 4 303 920 A divulgue un radar primaire utilisant des impulsions de longueurs différentes à des fréquences différentes pour améliorer une détection en élévation. Un document EP 2 922 144 A1 divulgue un radar secondaire bi-fonction.

Un but de l'invention est notamment de pallier l'inconvénient décrit ci-dessus. A cet effet, l'invention a pour objet un radar secondaire apte à détecter une cible en haute élévation dans le cône de silence, équipé d'une antenne principale ayant trois diagrammes de rayonnement, un diagramme somme, un diagramme différence et un diagramme affecté à une fonction de contrôle, correspondant à ladite antenne, ledit radar comportant en outre :
- un dispositif antennaire auxiliaire, composé d'une antenne et d'un élément rayonnant arrière situé à l'arrière de ladite antenne, fixé au-dessus de ladite antenne ;
- et des moyens de couplage, ledit dispositif antennaire auxiliaire :
   ∘ ayant trois diagrammes de rayonnement, un diagramme somme, un diagramme différence et un diagramme affecté à une fonction de contrôle, ledit diagramme de contrôle étant assuré par ledit élément rayonnant arrière ;
   ∘ étant incliné pour garantir un gain maximal de son diagramme somme dans le domaine en élévation caractérisant ledit cône de silence, par exemple entre 60° et 90° ;
ledit diagramme de contrôle assuré par ledit élément arrière présentant à 90° d'élévation un gain égal à celui du diagramme somme de ladite antenne du dispositif antennaire auxiliaire, puis un gain maximal au-delà de 90° d'élévation, lesdits moyens de couplage assurant le couplage des trois diagrammes de rayonnement de ladite antenne avec les trois diagrammes de rayonnement dudit dispositif antennaire auxiliaire.

Ladite antenne du dispositif antennaire auxiliaire est par exemple de type poutre.

La position du diagramme somme de ladite antenne du dispositif antennaire auxiliaire est par exemple ajustée en élévation et en gain par rapport au diagramme de ladite antenne principale en jouant respectivement sur l'inclinaison de ladite antenne et sur le coefficient de couplage entre ces deux antennes.

La raideur des flancs du diagramme somme de ladite antenne du dispositif antennaire auxiliaire est par exemple ajustée en jouant sur le nombre d'éléments en élévation.

La position du diagramme de contrôle assuré par ledit élément arrière est par exemple ajustée en élévation en jouant sur l'inclinaison dudit élément arrière dans un plan vertical.

Ladite antenne principale est par exemple composée d'une antenne de type LVA, à large ouverture verticale, et d'un élément rayonnant arrière.

D'autres caractéristiques et avantages de l'invention apparaîtront à l'aide de la description qui suit faite en regard de dessins annexés qui représentent :
- la figure 1, un exemple de diagramme de principe du gain d'antenne de radar ATC, déjà décrite ;
- la figure 2, un diagramme typique de rayonnement relatif en élévation d'une antenne LVA, déjà décrit ;
- la figure 3, un exemple d'architecture actuelle d'un radar secondaire fonctionnant en mode S ;
- la figure 4, la structure de l'antenne d'un radar selon l'invention et son couplage audit radar ;
- la figure 5, un exemple de réalisation d'une antenne selon l'invention ;
- la figure 6, les diagrammes typiques de rayonnement absolu en élévation des antennes composant une antenne selon l'invention ;

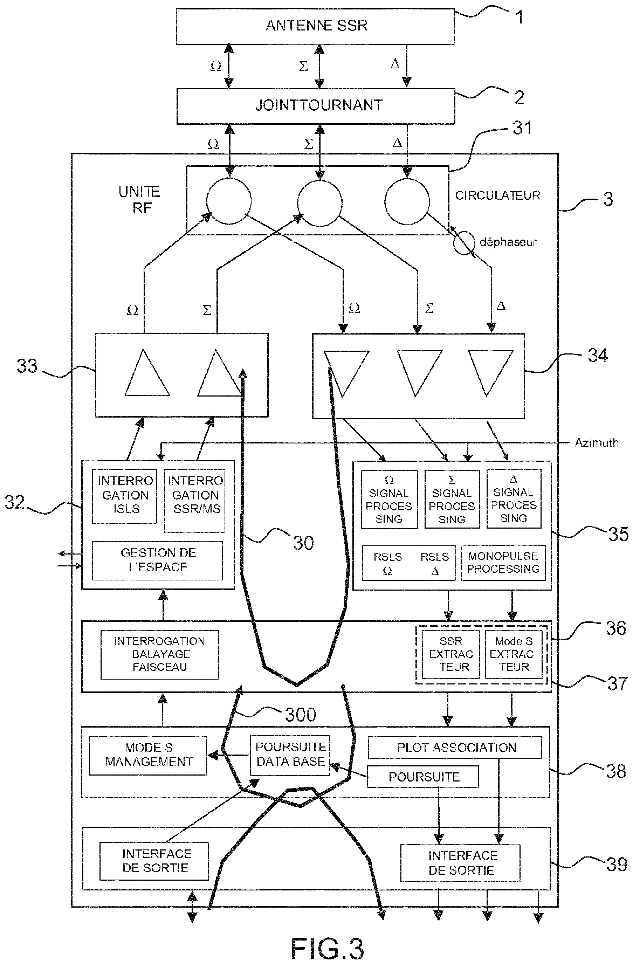

La figure 3 présente un exemple d'architecture actuelle d'un radar secondaire de surveillance fonctionnant en mode S, radar que l'on appellera par la suite radar SSR (« Secondary Surveillance Radar »), classiquement constituée par :
- l'antenne SSR 1, généralement de type LVA, assurant le rayonnement des interrogations SSR/Mode S, à la fréquence de 1 030 MHz et la captation des réponses, à la fréquence de 1 090 MHz, issues des transpondeurs à bord des aéronefs, un joint tournant 2 standard possédant trois galettes RF pour les trois voies de la bande L de la fonction SSR : la voie somme Σ, la voie différence Δ et la voie de contrôle Ω ;
- un cabinet 3, dit MSSR, incluant notamment deux systèmes indépendants (un seul étant représenté) assurant une redondance passive, chaque système mettant en œuvre les différentes fonctions dédiées au traitement SSR/Mode S.

Le cabinet MSSR 3 comporte une unité RF 31 pour le transfert des signaux RF de l'émetteur 33 vers les diagrammes Σ, Δ, Ω de l'antenne 1 et, réciproquement de ces diagrammes vers le récepteur 34. Chaque cabinet 3 comporte :
- une gestion spatio-temporelle 32 engendrant les interrogations en fonction des tâches à effectuer avec les cibles prédites présentes dans le lobe principal ;
- un émetteur 33 convertissant en signaux RF de forte puissance les interrogations à rayonner par l'antenne, à la fréquence de 1 030 MHz ;
- un récepteur 34 démodulant les signaux RF, à la fréquence de 1 090 MHz, reçus par l'antenne ;
- un traitement de signal 35 assurant la détection et le décodage des réponses reçues dans le lobe principal de l'antenne ;
- un extracteur 36 formant des plots extraits à partir des détections élémentaires (réponses), l'extracteur étant une partie d'un ensemble 37 de gestion du faisceau d'antenne.

Classiquement, le cabinet MSSR 3 peut inclure également les ressources redondées communes aux traitements primaire et secondaire, en particulier :
- l'association et le pistage des plots primaires et secondaires à l'intérieur d'un ensemble de gestion du balayage 38 (scan management);
- la gestion des déports et de la supervision notamment.

Le cabinet comporte également les interfaces redondées 39 avec les liens clients. Les fonctions annexes permettent la gestion du radar par le client en présentant la supervision, les déports plots et pistes et les paramétrages des fonctions primaires PSR, secondaires SSR/Mode S et déport.

En mode S principalement la gestion dynamique des avions est contrôlée par :
- la gestion du faisceau 37, pour ce qui concerne les activités liées au faisceau en azimut, parcourues par une ligne fléchée 30 sur la figure 3 incluant notamment la gestion spatio-temporelle 32 et l'extraction des plots 36 ;
- la gestion du balayage 38 pour ce qui concerne les activités liées au tour d'antenne parcourues par une ligne fléchée 300 sur la figure 3, incluant notamment le pistage et la prédiction des activités au prochain balayage de faisceau pour chaque avion.

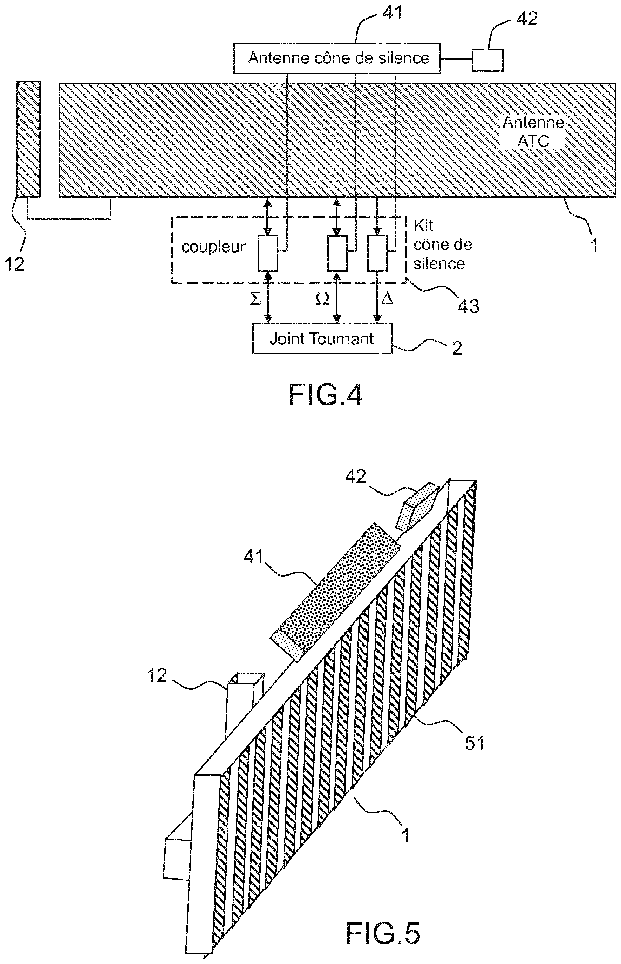

La figure 4 présente la structure de l'antenne d'un radar ATC selon l'invention et de son couplage au radar. Avantageusement, selon l'invention on ajoute un kit d'adaptation à l'architecture existante d'un radar ATC, du type de celle présentée par la figure 3 par exemple, permettant d'assurer le suivi dans le cône de silence de toutes les cibles secondaires quel que soit le protocole. Plus particulièrement ce kit est appliqué à l'aérien. Il pourrait être complété par une partie logicielle appliquée aux moyens d'extraction des plots 36.

Le kit comporte au moins une antenne poutre 41 (comportant peu d'éléments, typiquement de 1 à 3 éléments rayonnants en hauteur), qui peut être de petite dimension en largeur, par exemple 2 à 4 mètres, un élément rayonnant arrière 42 et des moyens de couplage 43. L'antenne poutre 41 est couplée à l'antenne SSR 1 (de type LVA standard) sur les mêmes accès existants par les moyens de couplage 43.

Aucune modification n'est nécessaire au niveau :
- ni de l'aérien (mécanismes, joint tournant, moteur...) ;
- ni de la chaîne d'émission et de réception.

L'invention est donc simple et économique à mettre en œuvre.

La figure 5 présente, en complément de la figure 4, un exemple de réalisation de l'ensemble antennaire d'un radar selon l'invention, par une vue en perspective. Cet ensemble est composé :
- de l'antenne SSR 1 et de son élément rayonnant arrière 12, formant l'antenne principale;
- de l'antenne poutre 41 et son élément rayonnant arrière 42, formant le dispositif antennaire auxiliaire;
les éléments rayonnants arrière 12, 42 étant affectés à une fonction de contrôle comme cela sera décrit par la suite.
L'antenne poutre 41 est fixée au-dessus de l'antenne SSR 1, de même orientation, plus précisément orientée vers l'avant de l'antenne SSR 1, elle est inclinée par rapport à celle de l'antenne SSR 1.
L'antenne SSR 1 est composée classiquement d'un réseau de barres rayonnantes 51. Cette antenne 1, de type LVA, peut être une antenne standard du marché ATC de la surveillance SSR, fonctionnant avec trois diagrammes de rayonnement : somme, différence et contrôle.

Un élément rayonnant 12, situé à l'arrière du panneau frontal constitué par les barres rayonnantes, permet d'effectuer une fonction de contrôle pour le mode SSR/Mode S, notamment en ce qui concerne la situation géographique des transpondeurs captés.

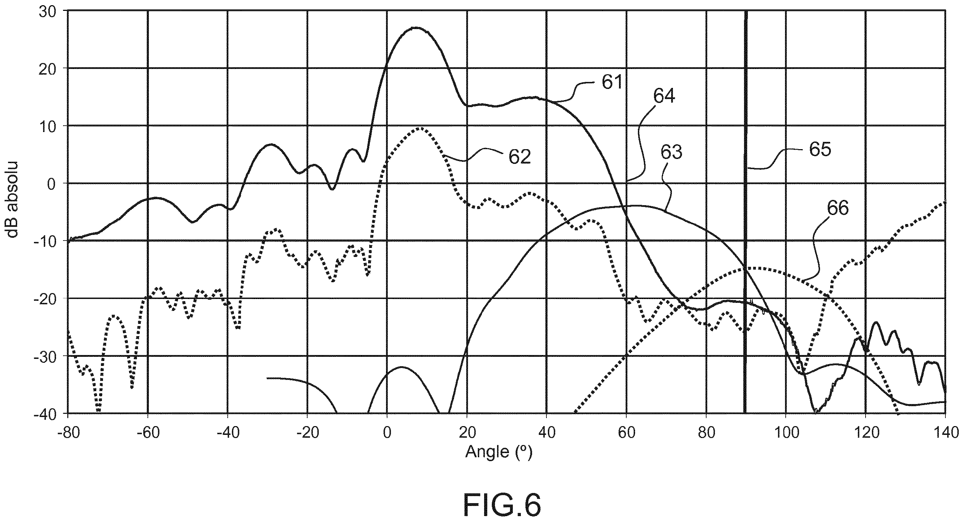

L'antenne poutre 41 est par exemple une antenne poutre souvent employée comme antenne IFF pour les radars militaires possédant donc les mêmes types de diagramme de rayonnement que l'antenne principale 1 de type LVA : somme, différence et contrôle.
De préférence elle comporte au moins deux éléments en élévation de sorte que la valeur de gain nulle soit proche de son lobe principal, en provoquant un raidissement des flancs de part et d'autre du lobe principal comme l'illustre le diagramme somme 63 de l'antenne poutre 41 présenté à la figure 6, décrite par la suite. Ce raidissement des flancs est fonction du nombre d'éléments d'antenne en élévation.
L'antenne 41 est inclinée dans un plan vertical pour orienter son gain maximal dans le cône de silence et pour garantir une minimalisation de son gain à la fois juste au-dessus de 90° d'élévation mais aussi au-dessous de 40°.
Elle comporte également un élément rayonnant 42 situé à l'arrière, dédié à son diagramme de contrôle Ω 66 illustré par la figure 6, également incliné en élévation, pour présenter un gain maximal au-delà de 90° d'élévation. De plus, les inclinaisons réciproques de l'antenne poutre 41 et de l'élément rayonnant 42 sont telles que leurs gains soient proches pour 90° d'élévation.

Ainsi cela permet de bloquer les transpondeurs qui ne sont pas dans la direction azimutale de l'antenne poutre 41 et permet alors d'éviter d'avoir des réponses parasites dans le dos de l'antenne

Les moyens de couplage 43 réalisent le couplage des trois diagrammes somme Σ, différence Δ et contrôle Ω de l'antenne poutre, avec un coefficient de couplage valant typiquement 25 dB (à ajuster selon la valeur du gain maximal du diagramme 63 de la voie somme de l'antenne poutre 41), aux trois diagrammes somme Σ, différence Δ et contrôle Ω de l'antenne SSR 1, dans le but de garantir un gain maximal du diagramme somme dans le cône de silence de l'ordre de 20 dB en dessous du plateau de gain somme de l'antenne SSR (plateau s'étendant de 20° à 40 ° d'élévation comme illustré par la figure 6).

La figure 6 déjà citée illustre, dans un système d'axes où les abscisses représentent les angles d'élévation et les ordonnées les gains absolus d'antenne, les diagrammes de rayonnement en élévation des antennes décrites ci-dessus pour la voie somme 61 de l'antenne SSR 1, pour la voie de contrôle 62 de l'antenne SSR 1, pour la voie somme 63 de l'antenne poutre 41, et pour la voie de contrôle 66 de l'élément rayonnant arrière 42 du dispositif antennaire auxiliaire.
Comme le montrent ces diagrammes, un objectif est d'assurer un gain minimum de l'ordre de 35 à 40 dB en dessous du maximum même à 90° d'élévation (les avions à haute élévation étant nécessairement proches en distance, le gain antenne requis pour leur détection est nettement plus faible que celui pour des avions à longue distance, typiquement 35 à 40 dB) . Cet objectif est obtenu en inclinant l'antenne poutre 41 ayant pour effet de translater ses diagrammes en élévation, et notamment son diagramme somme (translation le long de l'axe des abscisses). La valeur du coefficient de couplage entre l'antenne poutre 41 et l'antenne SSR 1, en jouant sur le gain, permet par ailleurs d'ajuster les diagrammes selon l'axe des ordonnées. L'ajustement de la position des diagrammes est ainsi complété par une translation selon l'axe des ordonnées.
La valeur du coefficient de couplage est ainsi définie, à la fois :
- pour éviter de polluer l'antenne SSR 1 par l'antenne poutre 41, soit par exemple plus de 25 dB d'écart de gain en dessous de 40° d'élévation :
   ∘ avec de très faibles pertes induites en émission et en détection ;
   ∘ et quasiment pas de modification de faisceau en azimut ;
- pour éviter de polluer par « garbling » les cibles proches à plus basse élévation en dessous de 40° (typique d'un radar d'aéroport) lors de la détection des cibles à haute élévation.

La zone 64 d'équivalence de gain des voies somme entre l'antenne SSR 1 et l'antenne poutre 41 se situe typiquement autour de 55° d'élévation. Au-delà de cette valeur d'élévation, le gain 63 de l'antenne poutre prend le relais du gain 61 de l'antenne SSR 1 pour assurer le gain minimal souhaité pour la voie somme jusqu'au zénith. On peut vérifier que le niveau transmis sur le diagramme de la voie somme 63 de l'antenne poutre 41 est bien supérieur au niveau du diagramme de la voie de contrôle 62 de l'antenne SSR 1 garantissant que les cibles en haute élévation de 60° à plus de 90° répondent aux interrogations du radar. La voie de contrôle 62 associée à l'élément arrière 12 de l'antenne SSR 1 permet classiquement le blocage des transpondeurs recevant des interrogations par les fuites du diagramme de rayonnement somme 61 de l'antenne pour les élévations de 90° à 180°.
De préférence le diagramme de rayonnement somme 63 de l'antenne poutre ne doit pas être trop large pour ne pas perturber le diagramme de rayonnement 61 de l'antenne principal en dehors du cône de silence. La voie de contrôle 66 associée à l'élément rayonnant 42, situé à l'arrière de l'antenne poutre 41, permet d'éviter de recevoir des réponses de cible au-delà de l'élévation à 90°, repérée par un trait 65 sur la figure 6. L'ajustement de la position en élévation du diagramme de contrôle 66 par rapport au diagramme de contrôle 62 de l'antenne SSR 1 se fait par translation selon l'axe des abscisses, en jouant sur l'inclinaison de l'élément rayonnant arrière 42.

Les signaux transmis par le radar via l'élément arrière 42 permettent ainsi le blocage du transpondeur d'une cible quand l'antenne principale 1 est dans la direction opposée à l'azimut de cette cible. Le diagramme de rayonnement et l'orientation de cet élément rayonnant 42 sont adaptés à cet effet, en particulier un réglage optimal devrait permettre de bloquer le transpondeur dès 91°.
Autour de la zone 64 d'équivalence des gains des voies somme de l'antenne SSR 1 et de l'antenne poutre 41, la recombinaison des signaux non maîtrisée en phase peut induire des pertes de détection sur une plage de l'ordre de +/- 5°, soit de +50° à +60°, en élévation dans l'exemple de cette figure 6. Pour limiter ces effets induits, il peut être utile d'assurer la mise en phase des signaux émis à 1 030 MHz par les deux diagrammes somme 61 et 63.

## Revendications

1. Radar secondaire équipé d'une antenne principale (1, 12) comportant deux éléments:
- une antenne SSR (1) présentant trois diagrammes de rayonnement, un diagramme somme (61), un diagramme différence et un diagramme contrôle (62) affecté à une fonction de contrôle, correspondant à ladite antenne SSR;
- un élément rayonnant arrière (12), affecté à une fonction de contrôle, associé à la voie de contrôle de l'antenne SSR (1);
**caractérisé en ce qu'**il comporte, en outre, des moyens aptes à détecter une cible en haute élévation localisée dans le cône de silence de ladite antenne SSR, lesdits moyens comportant:
- un dispositif antennaire auxiliaire (41, 42), fixé au-dessus de ladite antenne (1, 12), permettant d'assurer le suivi dans le cône de silence de toutes les cibles; ledit dispositif antennaire auxiliaire comportant:
- une antenne (41) orientée vers l'avant de ladite antenne principale, présentant trois diagrammes de rayonnement, un diagramme somme (63), un diagramme différence et un diagramme contrôle;
- un élément rayonnant (42) situé à l'arrière, affecté à une fonction de contrôle, présentant un diagramme contrôle (66);
- des moyens de couplage (43);
ladite antenne (41) étant de même orientation que l'antenne SSR (1) et étant inclinée en élévation par rapport à l'antenne SSR (1) de façon à présenter un gain maximal dans la direction du cône de silence et un gain minimal à la fois juste au-dessus de 90° d'élévation et au-dessous de 40° d'élévation;
ledit élément rayonnant arrière (42) étant également incliné en élévation, de façon à présenter un gain maximal au-delà de 90° d'élévation et à obtenir des inclinaisons réciproques de l'antenne (41) et de l'élément rayonnant arrière (42) telles que leurs gains soient sensiblement les mêmes pour une élévation voisine de 90°;
lesdits moyens de couplage (43) réalisant, de manière indépendante pour chaque diagramme, le couplage de chacun des trois diagrammes de rayonnement de ladite antenne principale (1, 12) avec le diagramme de rayonnement correspondant dudit dispositif antennaire auxiliaire (41, 42), le couplage étant réalisé avec un coefficient de couplage donné; de façon à obtenir trois diagrammes d'antenne résultants un diagramme somme résultant, un diagramme différence résultant et un diagramme contrôle résultant, permettant de garantir, dans le cône de silence, un gain maximal du diagramme somme résultant d'une valeur inférieure de l'ordre de 20 dB à celle du plateau de gain de la voie somme de l'antenne SSR (1).

2. Radar secondaire selon la revendication 1, **caractérisé en ce que** ladite antenne (41) du dispositif antennaire auxiliaire (41, 42) est de type poutre.

3. Radar secondaire selon l'une quelconque des revendications précédentes, **caractérisé en ce que** la position du diagramme somme (63) de ladite antenne (41) du dispositif antennaire auxiliaire est ajustée en élévation et en gain par rapport au diagramme (61) de ladite antenne principale (1) en jouant respectivement sur l'inclinaison de ladite antenne (41) et sur le coefficient de couplage entre ces deux antennes (41, 1).

4. Radar secondaire selon l'une quelconque des revendications précédentes, **caractérisé en ce que** la raideur des flancs du diagramme somme (63) de ladite antenne (41) du dispositif antennaire auxiliaire est ajustée en jouant sur le nombre d'éléments en élévation.

5. Radar secondaire selon l'une quelconque des revendications précédentes, **caractérisé en ce que** la position du diagramme de contrôle (66) assuré par ledit élément arrière (42) est ajustée en élévation en jouant sur l'inclinaison dudit élément arrière dans un plan vertical.

6. Radar secondaire selon l'une quelconque des revendications précédentes, **caractérisé en ce que** ladite antenne principale (1, 12) est composée d'une antenne (1) de type LVA, à large ouverture verticale, et d'un élément rayonnant arrière (12).

## Patentansprüche

1. Sekundärradar, ausgerüstet mit einer Hauptantenne (1, 12), welche zwei Elemente umfasst:
- eine SSR-Antenne (1), welche drei Strahlungsdiagramme aufweist, ein Summendiagramm (61), ein Differenzdiagramm und ein Kontrolldiagramm (62), welches einer Kontrollfunktion zugewiesen ist, welche der SSR-Antenne entspricht;
- ein hinteres Strahlelement (12), welches einer Kontrollfunktion zugewiesen ist, welche dem Kontrollkanal der SSR-Antenne (1) zugeordnet ist;
**dadurch gekennzeichnet, dass** er ferner Mittel umfasst, welche in der Lage sind, ein Ziel in großer Höhe zu erkennen, welches in dem toten Trichter der SSR-Antenne befindlich ist, wobei die Mittel Folgendes umfassen:
- eine Hilfsantennenvorrichtung (41, 42), welche oberhalb der Antenne (1, 12) befestigt ist, welche es ermöglicht, die Verfolgung aller Ziele in dem toten Trichter sicherzustellen; wobei die Hilfsantennenvorrichtung Folgendes umfasst:
- eine zum vorderen Bereich der Hauptantenne, welche drei Strahlungsdiagramme aufweist, ein Summendiagramm (63), ein Differenzdiagramm und ein Kontrolldiagramm, ausgerichtete Antenne (41);
- ein im hinteren Bereich angeordnetes, einer Kontrollfunktion zugewiesenes Strahlelement (42), welches ein Kontrolldiagramm aufweist (66);
- Kopplungsmittel (43);
wobei die Antenne (41) die gleiche Ausrichtung wie die SSR-Antenne (1) und in Bezug auf die SSR-Antenne (1) in der Höhe in einer Weise geneigt ist, dass sie eine maximale Verstärkung in der Richtung des toten Trichters und eine minimale Verstärkung gleichermaßen genau über 90° Höhe und unter 40° Höhe aufweist;
wobei das hintere Strahlelement (42) ebenfalls in der Höhe in einer Weise geneigt ist, dass es eine maximale Verstärkung oberhalb von 90° aufweist und derartige gegenseitige Neigungen der Antenne (41) und des hinteren Strahlelements (42) erzielt, dass ihre Verstärkungen im Wesentlichen die gleichen bei einer Höhe nahe 90° sind;
wobei die Kopplungsmittel (43) unabhängig für jedes Diagramm die Kopplung der drei Strahlungsdiagramme der Hauptantenne (1, 12) mit dem entsprechenden Strahlungsdiagramm der Hilfsantennenvorrichtung (41, 42), bewerkstelligen, wobei die Kopplung mit einem gegebenen Kopplungskoeffizienten bewerkstelligt wird; dies um drei resultierende Antennendiagramme zu erzielen, ein resultierendes Summendiagramm, ein resultierendes Differenzdiagramm und ein resultierendes Kontrolldiagramm, welche es ermöglichen, in dem toten Trichter eine maximale Verstärkung des resultierenden Summendiagramms mit einem um ungefähr 20 dB niedrigeren Wert gegenüber dem Verstärkungsplateau des Summenkanals der SSR-Antenne (1) zu gewährleisten.

2. Sekundärradar nach Anspruch 1, **dadurch gekennzeichnet, dass** die Antenne (41) der Hilfsantennenvorrichtung (41, 42) eine Antenne vom Typ Balkenantenne ist.

3. Sekundärradar nach einem der vorhergehenden Ansprüche, **dadurch gekennzeichnet, dass** die Position des Summendiagramms (63) der Antenne (41) der Hilfsantennenvorrichtung hinsichtlich der Höhe und der Verstärkung in Bezug auf das Diagramm (61) der Hauptantenne (1) eingestellt wird, indem man jeweils die Neigung der Antenne (41) und den Kopplungskoeffizienten zwischen diesen beiden Antennen (41, 1) beeinflusst.

4. Sekundärradar nach einem der vorhergehenden Ansprüche, **dadurch gekennzeichnet, dass** die Flankensteilheit des Summendiagramms (63) der Antenne (41) der Hilfsantennenvorrichtung eingestellt wird, indem man die Anzahl der Elemente in der Höhe beeinflusst.

5. Sekundärradar nach einem der vorhergehenden Ansprüche, **dadurch gekennzeichnet, dass** die Position des Kontrolldiagramms (66), welches durch das hintere Element (42) sichergestellt wird, in Bezug auf die Höhe eingestellt wird, indem man die Neigung des hinteren Elements in einer vertikalen Ebene beeinflusst.

6. Sekundärradar nach einem der vorhergehenden Ansprüche, **dadurch gekennzeichnet, dass** die Hauptantenne (1, 12) aus einer Antenne (1) vom Typ LVA, mit großer vertikaler Öffnung, und aus einem hinteren Strahlelement (12) gebildet wird.

## Claims

1. Secondary radar equipped with a main antenna (1, 12) comprising two elements:
- an SSR antenna (1) presenting three radiation patterns, a sum diagram (61), a difference diagram and a control diagram (62) assigned to a control function, corresponding to said SSR antenna;
- a rear radiating element (12), assigned to a control function, associated with the control channel of the SSR antenna (1);
**characterised in that** it further comprises means capable of detecting a high elevation target located in the silence cone of said SSR antenna, said means comprising:
- an auxiliary antenna device (41, 42), fixed above said antenna (1, 12), making it possible to ensure the tracking in the silence cone of all the targets; said auxiliary antenna device comprising:
- an antenna (41) oriented towards the front of said main antenna, exhibiting three radiation patterns, a sum diagram (63), a difference diagram and a control diagram;
- a radiating element (42) located at the rear, assigned to a control function, having a control diagram (66);
- coupling means (43);
said antenna (41) being of the same orientation as the SSR antenna (1) and being inclined in elevation with respect to the SSR antenna (1) so as to present a maximum gain in the direction of the silence cone and a minimum gain both just above 90° of elevation and below 40 ° of elevation;
said rear radiating element (42) also being inclined in elevation, so as to present a maximum gain beyond 90 ° of elevation and to obtain reciprocal inclinations of the antenna (41) and of the rear radiating element (42) such that their gains are substantially the same for an elevation close to 90 °;
said coupling means (43) carrying out, independently for each pattern, the coupling of each of the three radiation patterns of said main antenna (1, 12) with the pattern of corresponding radiation from said auxiliary antenna device (41, 42), the coupling being carried out with a given coupling coefficient; in order to obtain three resulting antenna diagrams: a resulting sum diagram, a resulting difference diagram and a resulting control diagram, making it possible to guarantee, in the silence cone, a maximum gain of the sum diagram resulting from a value of the order of 20 dB less than that of the gain plateau of the sum channel of the SSR antenna (1).

2. Secondary radar according to claim 1, **characterised in that** the said antenna (41) of the auxiliary antennal device (41, 42) is of boom type.

3. Secondary radar according to any one of the preceding claims, **characterised in that** the position of the sum pattern (63) of the said antenna (41) of the auxiliary antennal device is adjusted in elevation and in gain with respect to the pattern (61) of the said main antenna (1) by altering respectively the inclination of the said antenna (41) and the coefficient of coupling between these two antennas (41, 1).

4. Secondary radar according to any one of the preceding claims, **characterised in that** the steepness of the flanks of the sum pattern (63) of the said antenna (41) of the auxiliary antennal device is adjusted by altering the number of elevational elements.

5. Secondary radar according to any one of the preceding claims, **characterised in that** the position of the control pattern (66) ensured by the said rear element (42) is adjusted in elevation by altering the inclination of the said rear element in a vertical plane.

6. Secondary radar according to any one of the preceding claims, **characterised in that** the said main antenna (1, 12) is composed of an antenna (1) of LVA type, with wide vertical aperture, and of a rear radiating element (12).
